# EUROPEAN PATENT SPECIFICATION

(11) **EP 0 880 475 B1**
(45) Date of publication and mention of the grant of the patent: **24.10.2001**
(21) Application number: 97902725.7
(22) Date of filing: 06.02.1997
(51) Int. Cl.: C02F 3/34, C02F 3/30, C02F 9/00

(54) **PROCESS FOR THE TREATMENT OF WATER CONTAINING HEAVY METAL IONS**
VERFAHREN FÜR DIE BEHANDLUNG VON WASSER, WELCHES SCHWERMETALLE ENTHÄLT
PROCEDE DE TRAITEMENT D'EAU CONTENANT DES IONS DE METAL LOURD

(30) Priority: 06.02.1996 EP 96200259; 20.05.1996 EP 96201427
(43) Date of publication of application: 02.12.1998
(73) Proprietor: Thiopaq Sulfur Systems B.V., 8560 AB Balk (NL)
(72) Inventor: BUISMAN, Cees, Jan, Nico, NL-8571 RH Harich (NL); DIJKMAN, Henk, NL-8651 AA Ijlst (NL)
(74) Representative: de Bruijn, Leendert C.
(86) International application number: NL9700036
(87) International publication number: WO9729055

(56) References cited:
- WO-A-80/02281
- WO-A-91/16269
- DE-A- 2 651 673
- PATENT ABSTRACTS OF JAPAN vol. 009, no. 160 (C-289), 4 July 1985 & JP 60 034796 A (KURITA KOGYO KK), 22 February 1985, cited in the application

## Description

### Technical field

The present invention is in the field of waste water treatment. In particular, the invention relates to a process for the removal of heavy metal ions from metal-containing waste water and the removal of sulphate from sulphate-containing waste water, wherein sulphate is biologically reduced to sulphide, sulphide reacts with metal ions to form metal sulphides, and metal sulphides formed are separated from the waste water.

### Background

A process of removing sulphur compounds and heavy metal ions from water is known from WO 80/02281. A part of the waste water containing heavy metals and sulphate is contacted with sulphate-reducing bacteria and the resulting sulphide-containing liquid is combined with the remaining part of the waste water to precipitate the insoluble metal sulphides formed.

An improved process is described in WO 91/16269. According to that process, waste water containing heavy metals is caused to contain sulphide, in particular by biological reduction of sulphate present in the waste water, and the sulphide precipitates the heavy metals as metal sulphides. The remaining sulphide is oxidised to elemental sulphur in an aerobic reactor using a minimum sulphide load. The heavy metal sulphides and the elemental sulphur produced are separated together by settling, filtration, centrifugation or flotation.

According to JP-A-60-34796. waste water containing heavy metals is contacted with hydrogen sulphide to produce insoluble metal sulphides. The resulting liquid is treated with sulphate-reducing bacteria to produce hydrogen sulphide which is returned to the previous stage to produce metal sulphides. Subsequently, the metal sulphides arc separated and the bacterial sludge is returned to the bacterial treatment stage.

These prior art methods have in common that the insoluble metal sulphides are separated off after the biological reduction step, which means that the bacteria are mixed with all the metal sulphides formed; this makes recovery of metals difficult and may hamper bacterial growth. Although the process of WO 91/16269 leads to an efficient removal of heavy metals and sulphur compounds from waste water which contains low or moderate levels of sulphate, the efficiency decreases when the waste water contains high levels of sulphate, e.g. 10 g/l or more, presumably by intoxication of the sulphate-reducing bacteria. Moreover, the prior process does not allow a selective precipitation and reuse of the heavy metals.

### Description of the invention

A process has now been found for the removal of heavy metals and sulphate, which does not have the drawbacks of the prior art processes.

The process for the removal of heavy metals and sulphate as stated above is characterised according to the invention in that biologically produced sulphide is recycled to the metal-containing waste water and metal sulphides are separated prior to the biological reduction of sulphate.

The metal-containing waste water and the sulphate-containing waste water may be different streams or may be one and the same waste water stream. The process is especially useful when the sulphate and heavy metals arc present in a single stream.

Although generally reference is made herein to "sulphate", other dissolved or dispersed sulphur compounds having higher oxidation states, such as sulphite, thiosulphatc and elemental sulphur, can be treated similarly.

An essential difference between the present process and prior art processes for removing heavy metals and sulphate is that the stage of reducing sulphate to sulphide is located downstream of the heavy metal precipitation and separation. This is especially advantageous when the waste water contains high levels of metals and sulphate or when the anacrobic reactor is relatively turbulent, such as when fed with hydrogen. To this end. a part of the sulphide produced in the anacrobic reactor is recycled to the incoming waste water. This may be a part of the liquid effluent or it may be gaseous hydrogen sulphide issuing from the anacrobic reactor if necessary with the aid of a carrier gas, or both. The level of sulphide recycling can be adjusted such that optimum metal precipitation occurs.

If necessary, the pH at the stage of metal precipitation may be adjusted so as to precipitate all or only a desired part of the heavy metal ions. For example, if the pH is kept at low values, e.g. between 0 and 2, only noble metal ions such as copper will precipitate, whereas if the pH is adjusted to e.g. 3 or higher, other metals such as zinc will also precipitate, depending on the respective solubility products.

When metal precipitation at low pH is desired, it will be preferred to use hydrogen sulphide gas rather than liquid anaerobic effluent, since the latter may raise the pH to a too high extent.

The process of the invention can be used to selectively precipitate various heavy metal ions, by varying the pH and the redox potential at the stage where sulphide is added to the metal-containing influent. To this end the hydrogen sulphide can be added at different points, each point having a different pH and optionally a different redox potential, and each one having a downstream metal sulphide separation step. The number of different metal precipitation stages may be from one to three or even more.

Common pH-regulating agents such as sodium hydroxide can be used for adjusting the pH. Advantageously however, the effluent of the desulphurising process can be used to adjust the pH, because it usually has a neutral to alkaline pH; this results in a saving of chemicals.

In the process according to the invention, the heavy metal stream may be separate from the sulphur-containing stream. Especially when differential metal precipitation is used, the hydrogen sulphide may originate from a separate sulphate-containing stream, or from another stream which, upon anaerobic treatment, yields hydrogen sulphide, such as in biogas. In this way, the pH control during metal precipitation can be performed without buffering, thus making the process more economical.

Suitable bacteria for reducing sulphur compounds to sulphide in the anaerobic reactor include sulphur and sulphate reducing bacteria, such as species of the genera *Desulfovibrio, Desulfotomaculum, Desulfomonas, Thermodesulfobacterium, Desulfobulbus, Desulfobacter, Desulfococcus*, *Desulfonema*, *Desulfosarcina*, *Desulfobacterium* and *Desulforomas*. In general, these bacteria arc available from various anaerobic cultures and/or grow spontaneously in the anaerobic reactor.

It will usually be necessary to add an electron donor in order to reduce the sulphur compounds to sulphide, especially in the case of treating water which does not contain organic waste. Depending on the particular use, hydrogen, or carbon monoxide is added. Hydrogen is the preferred electron donor. If necessary, nutrient elements in the form of nitrogen and phosphate are added as well. The addition of trace elements will only exceptionally be necessary, when they are not sufficiently available in the metal-containing water.

Hydrogen is especially preferred as a hydrogen donor, when the recycled sulphide is gaseous hydrogen sulphide. The hydrogen can then act both as an electron donor for the anaerobic reactor and as a carrier gas for the H₂S; it may then advantageously be recycled to the anaerobic reactor.

Examples of waste water containing heavy metals that can be treated using the process of the invention are ground water, mine effluents, industrial waste water, for example from the photographic industry and metallurgy, and effluents of waste gas scrubbers. Heavy metals that can be removed using the process of the invention include all metals having a low solubility product of the corresponding sulphide. Examples are lead, tin, bismuth, cadmium, mercury, silver, zinc, copper, nickel, cobalt, iron, manganese, chromium, vanadium and titanium.

The process of the invention for removing sulphate can preferably be used for relatively concentrated sulphate solutions, e.g. more than 5 g/l, especially more than 10 g/l, in particular more than 20 g sulphate per 1. The use of desulphurised effluent for regulating the pH has the additional advantage of lowering the sulphate concentration of the influent, and of reducing the need for chemicals.

It is often preferred that residual sulphide issuing from the anaerobic reactor and not recycled for metal precipitation is oxidised before discharge, e.g. to sulphate. In particular however, residual sulphide is oxidised to elemental sulphur, preferably in an aerobic process using sulphide-oxidising bacteria. Elemental sulphur is separated to produce desulphurised waste water, which can be used for dilution or pH regulation as described above. This biological sulphide oxidation is especially appropriate when treating waste containing both heavy metals and sulphate in a single flow.

By maintaining a low residual sulphide concentration in the aerobic step (the micro-acrophilic sulphide oxidation) and in the separation step where elemental sulphur and grown biomass arc separated from the water flow, redissolution of residual metals is prevented. This concentration can vary over a wide range and can for example be 0.1-50 mg/l, preferably 1-10 mg of sulphide/l. Bacteria that can be used in the aerobic reactor belong to the group of colourless sulphur bacteria, including *Thiobacillus*, *Thiomicrospira*, *Sulfolobus* and *Thermothrix*. If desired, the aerobic reactor can be operated in such a way that the elemental sulphur produced acts as a carrier material for the aerobic bacteria, as described in WO 94/29227. This can be effected either by an internal solid separator in the aerobic reactor, or by a return flow from the separation step to the aerobic reactor.

Any sulphide ions remaining after the sulphur separation step can be oxidised for example to sulphate in a way known per sc (for example by aeration or peroxide addition) before discharge.

As an alternative to sulphide removal by oxidation to elemental sulphur, in case of an excess of sulphuric acid in the waste water. residual sulphide can be avoided by precipitation using solubilisable metal salts, preferably salts (or oxides, hydroxides) of the same metal as removed in the preceding process (e.g. Zn, Cu, Co, Ni). The metal salts can be added to the waste water at such a level that all sulphuric acid is converted to metal sulphates. The metal sulphates arc then reduced to metal sulphides and the metal sulphides are precipitated. As a result, the amount of sulphide (or hydrogen sulphide) produced subsequently is used entirely for the precipitation of the metals. As an advantage thereof, no downstream sulphide removal is necessary. This variant is especially useful if the resulting metal sulphide can be recycled (e.g. in a zinc factory or a copper mine). For example, in a process for removing zinc ions and excess sulphate ions (sulphuric acid) from waste water, the sequence of steps can be:
i) addition of zinc ions in the form of e.g. zinc oxide to the waste water to convert all sulphuric acid to zinc sulphate;
ii) zinc sulphide precipitation by addition of hydrogen sulphide to the waste water;
iii) separation of precipitated zinc sulphide;
iv) reduction of sulphate ions to sulphide and return of the sulphide to step ii);
v) discharge of treated waste water, optionally after final acrobic treatment to remove last traces of sulphide.

### Description of the figures

The process for heavy metal and sulphate removal according to the invention can be carried out in an apparatus such as schematically depicted in the figures.

### Figure 1

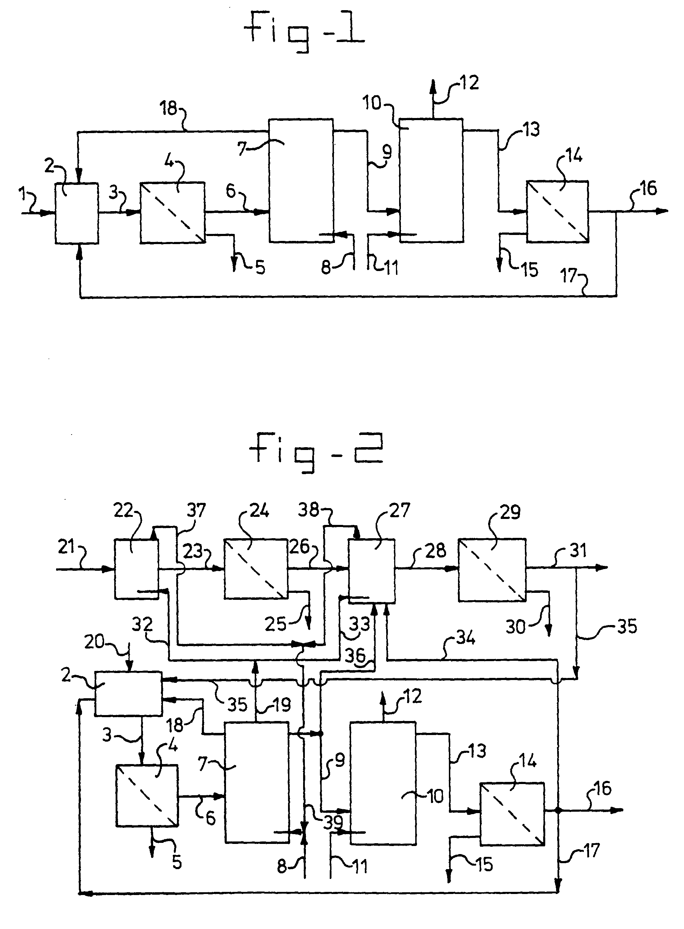

According to figure 1, a waste water supply 1 containing both heavy metals metal and sulphate is fed to a mixing tank 2, where insoluble metal sulphides are formed. The slurry is removed from the mixing tank through 3 and fed to a separator 4, where metal sulphides arc separated off at 5. The remaining liquid is fed through 6 to an anacrobic reactor 7, wherein the sulphur compounds arc reduced to sulphide. Nutrients and electron donor (e.g. ethanol or hydrogen) are added through 8. A part of the effluent of anaerobic reactor 7 is fed through 9 to aerobic reactor 10, to which an oxygen-containing gas (air) is supplied through 11. The oxygen supply is adjusted such that sulphide is predominantly oxidised to elemental sulphur. Residual gases are vented through 12. The liquid which contains sulphur is removed from the aerobic reactor 10 through 13 and fed to separator 14 for separating sulphur. Sulphur is separated through 15, whereas the purified effluent leaves the separator 14 through 16. A part of the sulphur separated at 15 may be returned to the aerobic reactor 10 (not shown). A part of the purified effluent can be recycled through 17 to mixing tank 2 for adjusting the sulphate concentration in the influent and raising the pH as necessary. A part of the sulphide-containing effluent of the anaerobic reactor 7 is supplied through line 18 to mixing tank 2. Any gases issuing from anaerobic reactor 7 may also be fed through line 18, or may be separately treated.

### Figure 2

This figure shows a process for the selective recovery of metals from separate streams 20 and 21 containing sulphate or other oxidised sulphur compounds, and heavy metal ions, respectively, or from a single stream 21 containing both sulphate or other oxidised sulphur components and heavy metals. The sulphate-containing influent 20 or 35 is introduced into a mixing tank 2 and then conducted through line 3, separator 4 and line 6 to the anaerobic reactor 7. Heavy metals present in stream 20 or 35 are separated through 5. The further sequence is the same as in figure 1. resulting in a desulphurised effluent 16; in an alternative arrangement, items 10-16 may be left out, e.g. if no excess of sulphides is produced and all sulphides can be used to precipitate the metals. On the other hand, if influent 20 does not contain unacceptably high levels of metals, sulphide return line 18 and separator 4 may be omitted. Influent 21 containing heavy metals is fed to a mixing tank 22 to which hydrogen sulphide gas is supplied through 19 and 32, using hydrogen both as a carrier gas and as an electron donor supplied through 8. The pH in mixing tank 22 is adapted for selective removal of metals (e.g. for copper, the pH will be about 2). The resulting slurry is conducted through 23 to separator 24, from which heavy metal sulphides arc separated off at 25. When other metals have to be recovered or removed, the resulting liquid is fed through 26 to second mixing tank 27, where the pH is raised by means of a part of the desulphurised effluent through 34 or a part of the reactor effluent introduced through 36 or by another alkalinising liquid. Additional hydrogen sulphide can be introduced through 19 and 33. The resulting slurry is conducted through 28 to separator 29, from which further heavy metal sulphides are separated off at 30. The spent gas (containing hydrogen and residual hydrogen sulphide) is recycled through 37, 38 and 39. Further differential heavy metal separation may be effected through a repeated sequence 26-27-28-29-30. The final effluent is discharged through 31 or, in the case of a single stream, through 16.

### Figure 3

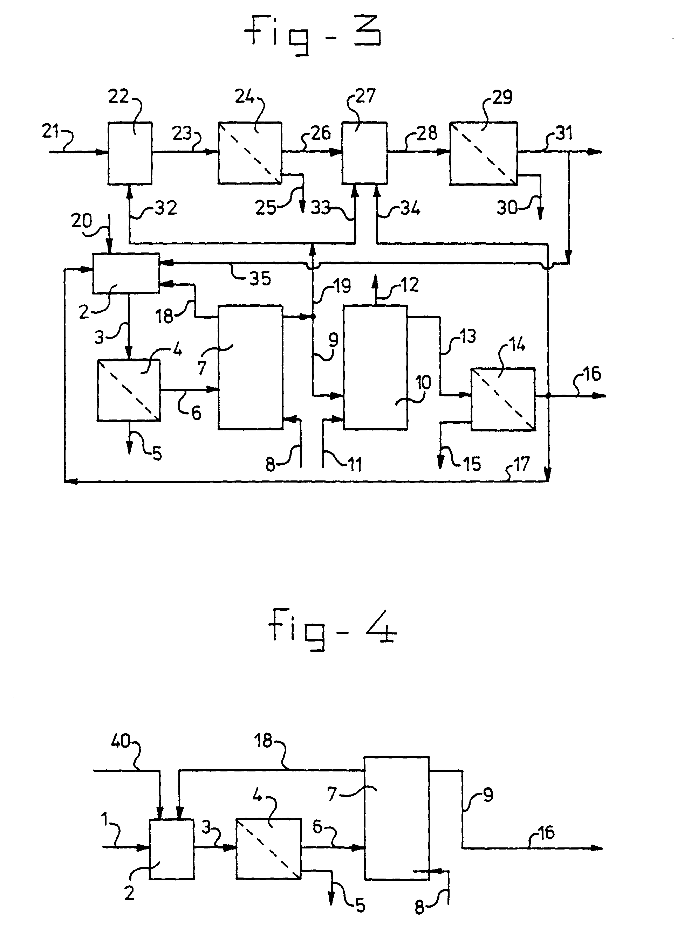

This figure shows a variant of the apparatus shown in figure 2, now using a liquid sulphide supply 19 + 32 (+33) to the mixing tanks. Apart from return lines 37/38/39, the same applies here as in figure 2. This apparatus is especially favourable for treating a single stream containing both high sulphate levels and heavy metals.

### Figure 4

This figure shows a variant of the apparatus shown in figure 1. Mixing tank 2 is provided with an additional inlet 40 for metal salts or metal oxides adjusted to the sulphate content of influent 1. In case of treating concentrated sulphated streams, effluent 9 containing sulphides is relatively small and thus no aerobic step producing sulphur is necessary. If desired, a relatively simple oxidation unit converting residual sulphide to sulphate can be inserted in the effluent line (not shown).

### Example

An installation as shown in figure 2 was used for the treatment of waste water streams containing sulphuric acid, copper and iron as well as traces of other metals. Hydrogenfed anaerobic reactor 7 had a capacity of 5 m³ and aerobic reactor 10 had a capacity of 3 m³. Metal (Fe/Cu) sulphides were separated in separator 4, elemental sulphur in separator 14 and copper sulphide in separator 24. Bubble column 22 had a capacity of 2.5 m³. The installation did not require additional alkali. In operation, the following flows and concentrations applied:

| flow | flow rate (m³/h) | SO₄²⁻ (g/l) | Cu²⁺ (mg/l) | Fe²⁺/Fe³⁺ (mg/l) |
|---|---|---|---|---|
| influent 20 (pH 3) | 0.1 | 30 | 200 | 500 |
| influent 21 (pH 2) | 5 | | 200 | 500 |
| sulphide supply 18 | 0.05 | | | |
| recycle 17 | 0.5-1 | | | |
| effluent 16 (pH 8) | 0.1 | < 1 | < 1 | < 1 |
| effluent 31 | 5 | | < 10 | 500 |

In this installation, parts 27-30, 32-36 and 38 were not present. However, residual iron could be recovered by using these parts, by raising the pH in tank 27 e.g. to pH 5 and by raising the flow rate of 20 or by raising its sulphate content.

## Claims

1. Process for the removal of heavy metal ions from metal-containing waste water and the removal of sulphate from sulphate-containing waste water, wherein sulphate is biologically reduced to sulphide using hydrogen or carbon monoxide as an electron donor, sulphide reacts with metal ions to form metal sulphides, and metal sulphides formed are separated from the waste water, ***characterised in that*** biologically produced sulphide is recycled to the metal-containing waste water and metal sulphides are separated prior to the biological reduction of sulphate.

2. Process according to Claim 1, wherein the metal-containing waste water and the sulphate-containing waste water are a single flow.

3. Process according to Claim 1 or 2, wherein hydrogen is used as an electron donor for the biological reduction.

4. Process according to any one of Claims 1-3, wherein sulphide is recycled in the form of a sulphide-containing liquid.

5. Process according to any one of Claims 1-3, wherein sulphide is recycled in the form of gaseous hydrogen sulphide.

6. Process according to Claim 5, wherein hydrogen is used as a carrier gas for hydrogen sulphide.

7. Process according to any one of Claims 1-6, wherein sulphide is recycled to the metal-containing waste water at two or more points, each one having a different pH, and each one having a downstream metal sulphide separation step.

8. Process according to any one of Claims 1-7, wherein remaining sulphide is oxidised to elemental sulphur, and elemental sulphur is separated to produce desulphurised waste water.

9. Process according to any one of Claims 1-7, wherein the waste water contains an excess of sulphate with respect to heavy metals, and a heavy metal salt is added to produce substantially stoichiometrical levels of sulphate and heavy metal.

10. Process according to any one of Claims 1-9, wherein a part of the desulphurised waste water is recycled to the metal-containing waste water.

## Patentansprüche

1. Verfahren zum Entfernen von Schwermetallionen aus einem Metall enthaltenden Abwasser und zum Entfernen von Sulfat aus einem Sulfat enthaltenden Abwasser, wobei das Sulfat unter Verwendung von Wasserstoff oder Kohlenmonoxid als Elektronendonor biologisch zu Sulfid reduziert wird, das Sulfid mit den Metallionen reagiert, wobei Metallsulfide gebildet werden, und die gebildeten Metallsulfide vom Abwasser abgetrennt werden, **dadurch gekennzeichnet, dass** das biologisch hergestellte Sulfid zum Metall enthaltenden Abwasser zurückgeführt wird und die Metallsulfide vor der biologischen Reduktion des Sulfats abgetrennt werden.

2. Verfahren nach Anspruch 1, wobei das Metall enthaltende Abwasser und das Sulfat enthaltende Abwasser als Gemisch vorliegen.

3. Verfahren nach Anspruch 1 oder 2, wobei Wasserstoff als Elektronendonor für die biologische Reduktion verwendet wird.

4. Verfahren nach einem der Ansprüche 1 bis 3, wobei das Sulfid in Form einer Sulfid enthaltenden Flüssigkeit zurückgeführt wird.

5. Verfahren nach einem der Ansprüche 1 bis 3, wobei das Sulfid in Form von gasförmigem Schwefelwasserstoff zurückgeführt wird.

6. Verfahren nach Anspruch 5, wobei Wasserstoff als Trägergas für den Schwefelwasserstoff verwendet wird.

7. Verfahren nach einem der Ansprüche 1 bis 6, wobei das Sulfid an zwei oder mehreren Stellen zum Metall enthaltenden Abwasser zurückgeführt wird, die sich hinsichtlich des pH-Werts des Abwassers unterscheiden, und wobei nach jeder dieser Stellen Metallsulfide abgetrennt werden.

8. Verfahren nach einem der Ansprüche 1 bis 7, wobei verbleibendes Sulfid zu elementarem Schwefel oxidiert wird und der elementare Schwefel dann abgetrennt wird, um entschwefeltes Abwasser zu erhalten.

9. Verfahren nach einem der Ansprüche 1 bis 7, wobei das Abwasser, bezogen auf die Schwermetalle, eine überschüssige Menge an Sulfat enthält und ein Schwermetallsalz zugegeben wird, um nahezu stöchiometrische Mengen an Sulfat und Schwermetallen zu erhalten.

10. Verfahren nach einem der Ansprüche 1 bis 9, wobei ein Teil des entschwefelten Abwassers zum Metall enthaltenden Abwasser zurückgeführt wird.

## Revendications

1. Procédé pour éliminer des ions de métaux lourds d'eaux usées contenant des métaux et pour éliminer le sulfate d'eaux usées contenant du sulfate, dans lequel le sulfate est biologiquement réduit en sulfure en utilisant de l'hydrogène ou du monoxyde de carbone comme donneur d'électrons, le sulfure réagit avec les ions métalliques pour former des sulfures métalliques, et les sulfures métalliques formés sont séparés des eaux usées, **caractérisé en ce que** le sulfure biologiquement produit est recyclé dans les eaux usées contenant des métaux et **en ce que** les sulfures métalliques sont séparés avant la réduction biologique du sulfate.

2. Procédé selon la revendication 1, dans lequel les eaux usées contenant des métaux et les eaux usées contenant du sulfate constituent un courant unique.

3. Procédé selon la revendication 1 ou 2, dans lequel l'hydrogène est utilisé en tant que donneur d'électrons pour la réduction biologique.

4. Procédé selon l'une quelconque des revendications 1 à 3, dans lequel le sulfure est recyclé sous la forme d'un liquide contenant du sulfure.

5. Procédé selon l'une quelconque des revendications 1 à 3, dans lequel le sulfure est recyclé sous la forme de sulfure d'hydrogène gazeux.

6. Procédé selon la revendication 5, dans lequel l'hydrogène est utilisé en tant que gaz vecteur pour le sulfure d'hydrogène.

7. Procédé selon l'une quelconque des revendications 1 à 6, dans lequel le sulfure est recyclé dans les eaux usées contenant des métaux en deux points ou plus, chaque point ayant un pH différent et chaque point ayant une étape de séparation du sulfure métallique en aval.

8. Procédé selon l'une quelconque des revendications 1 à 7, dans lequel le sulfure restant est oxydé en soufre élémentaire, et le soufre élémentaire est séparé de manière à produire des eaux usées désulfurisées.

9. Procédé selon l'une quelconque des revendications 1 à 7, dans lequel les eaux usées contiennent un excès de sulfate par rapport aux métaux lourds, et un sel de métal lourd est ajouté afin de produire des concentrations sensiblement stoechiométriques de sulfate et de métaux lourds.

10. Procédé selon l'une quelconque des revendications 1 à 9, dans lequel une partie des eaux usées désulfurisées est recyclée dans les eaux usées contenant des métaux.
